# EUROPÄISCHE PATENTSCHRIFT

(11) **EP 2 158 830 B1**
(45) Veröffentlichungstag und Bekanntmachung des Hinweises auf die Patenterteilung: **27.10.2010**
(21) Anmeldenummer: 09011203.8
(22) Anmeldetag: 01.09.2009
(51) Int. Cl.: A47J 43/25

(54) **Vorrichtung zum Schneiden von Obst, Gemüse oder dergleichen**
Device for slicing fruits and vegetables or the like
Dispositif destiné à couper des fruits et des légumes ou similaires

(30) Priorität: 02.09.2008 DE 202008011688 U
(43) Veröffentlichungstag der Anmeldung: 03.03.2010
(73) Patentinhaber: Schleinzer, Werner, 2361 Laxenburg (AT)
(72) Erfinder: Schleinzer, Werner, 2361 Laxenburg (AT)
(74) Vertreter: Vossius, Tilman

(56) Entgegenhaltungen:
- EP-A- 0 570 088
- EP-A- 1 955 628
- DE-U1-202007 008 380
- GB-A- 202 821
- US-A- 4 733 588

## Beschreibung

### GEBIET DER ERFINDUNG

Die vorliegende Erfindung betrifft eine Vorrichtung zum Schneiden von Schneidgut, wie Obst, Gemüse oder dergleichen. Insbesondere betrifft die vorliegende Erfindung einen Küchenhobel mit einem Grundkörper, an dem ein Messer festgelegt ist, das an einer Kante einer Auslauffläche angeordnet ist.

### HINTERGRUND DER ERFINDUNG

Küchenhobel werden zum Schneiden von Schneidgut wie Obst, Gemüse etc. verwendet. Dabei wird der Küchenhobel in der Regel an einem Haltegriff mit einer Hand gehalten oder auf einen Behälter, wie beispielsweise eine Schale, aufgesetzt.

Mit der anderen Hand wird das Schneidgut entweder direkt oder mittels eines separaten Halters, auch Fruchthalter genannt, in Längsrichtung über eine Führungsfläche und eine Auslauffläche des Küchenhobels hin- und herbewegt. Bei jede Schneidhub von der Führungsfläche hin zur Auslauffläche wird durch das Messer eine Scheibe von dem Schneidgut abgeschnitten und fällt durch einen Schlitz zwischen dem Messer und der Führungsfläche nach unten, beispielsweise in eine Schale.

Das Messer ist dabei generell quer zur Längserstreckung des Grundkörpers ausgerichtet. Dabei kann das Messer rechtwinklig zur Längsachse des Grundkörpers ausgerichtet sein oder schräg hierzu. Ferner sind Küchenhobel bekannt, bei denen das Messer in Schneidrichtung V-förmig zuläuft, wie dies beispielsweise in EP 1 330 341, EP 1 264 669, EP 1 633 536, DE 10 2004 038 815 und DE 20 2007 008 380 beschrieben wird.

Diese bekannten Vorrichtungen bestehen aus einem Grundkörper und einem Einsatz, der die Führungsfläche des Küchenhobels ausbildet. Der auswechselbare Einsatz kann zur Schnittstärkenverstellung aus dem Grundkörper herausgenommen und um 180 gedreht wieder eingesetzt werden. Ferner können auch Einsätze unterschiedlicher Art verwendet werden, beispielsweise solche mit einer Reihe von hochstehenden Messern, die das Schneidgut bei einem Schneidhub vertikal anschneiden. Wenn bei dem darauf folgenden Schneidhub das Schneidgut um 90 gedreht wird, können folglich Würfel anstelle von Scheiben erzeugt werden.

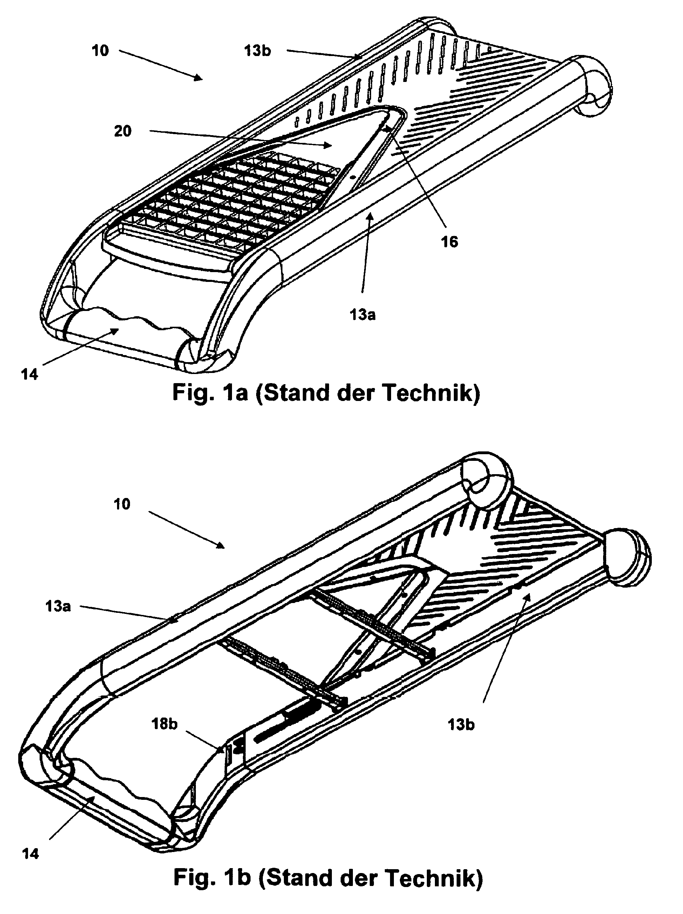

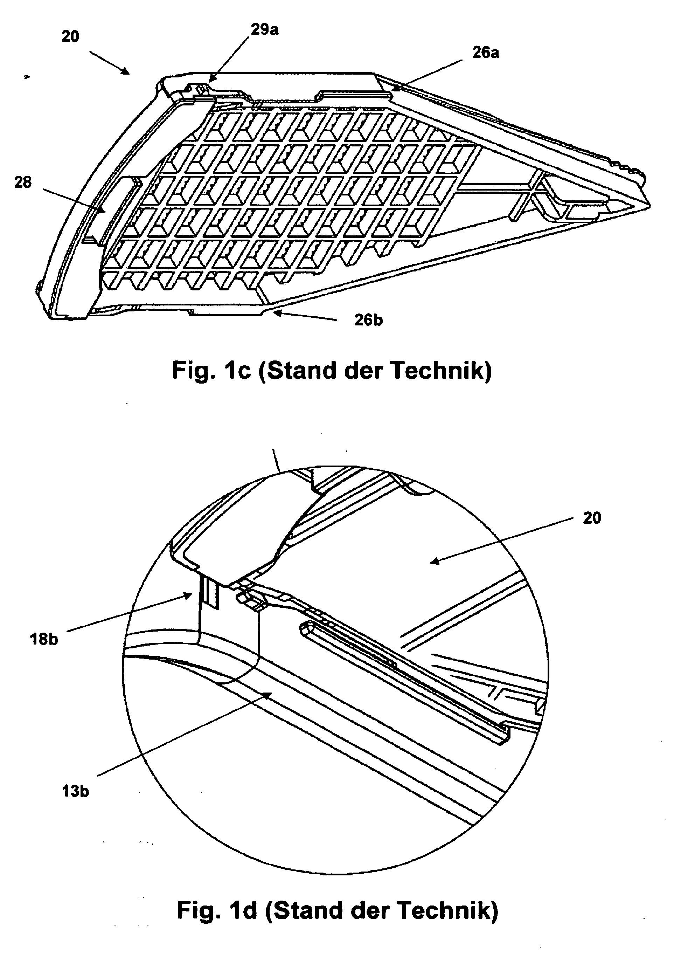

Beim Schneiden von Gemüse oder Obst muss ein eingesetzter Einsatz aus Sicherheitsgründen in dem Küchenhobel im Wesentlichen fixiert sein. Dieses Problem wird bei dem aus der vorstehend erwähnten DE 20 2007 008 380 bekannten Küchenhobel, der in den Figuren 1a, 1b und 1d dargestellt ist, folgendermaßen gelöst. Ein für diesen Küchenhobel 10 ausgestalteter Einsatz 20, der separat in Figur 1c dargestellt ist und beispielsweise als Käsereibe verwendet werden kann, weist an seinem proximalen bzw. hinteren Ende eine Verriegelungseinrichtung zum Arretieren bzw. Verriegeln des vollständig in den Küchenhobel 10 eingesetzten Einsatzes 20 auf. Diese Verriegelungseinrichtung besteht im Wesentlichen aus einem mittleren Löseelement 28 und zwei seitlichen Arretierungsstiften 29a, 29b. Die Verriegelungseinrichtung ist derart mittels Federn vorgespannt, dass sich die seitlichen Arretierungsstifte 29a, 29b in ihrer ausgefahrenen Position befinden. In dieser ausgefahrenen Position der seitlichen Arretierungsstifte 29a, 29b ist der Abstand zwischen den äußeren Enden der zwei Arretierungsstifte 29a, 29b ein wenig größer als der Abstand zwischen den Innenseiten der seitlichen Längsträger 13a, 13b des Küchehobels 10, und zwar insbesondere in dem Bereich, in dem der Einsatz 20 zwischen den Innenseiten der beiden Längsträger 13a, 13b in den Kückenhobel 10 eingebracht wird. Dies führt dazu, dass beim Einbringen des Einsatzes 20 in den Küchenhobel 10, sobald die Arretierungsstifte 29a, 29b jeweils in Berührung mit den Innenseiten der Längsträger 13a, 13b des Küchenhobels 10 kommen, die Arretierungsstifte 29a, 29b zunächst gegen die Vorspannkraft der Verriegelungseinrichtung nach innen gedrückt werden. Wie sich dies jedoch der Figur 1b und insbesondere der Figur 1d entnehmen lässt, sind in den Innenseiten der Längsträger 13a, 13b jeweils im Wesentlichen rechteckige Aussparungen 18a, 18b vorgesehen (wobei in den Figuren 1b und 1d nur die Aussparung 18b zu sehen ist), in die die Arretierungsstifte 29a, 29b aufgrund der Vorspannkraft der Verriegelungseinrichtung einschnappen können, nachdem der Einsatz 20 vollständig in den Küchenhobel 10 eingebracht worden ist. Soll der Einsatz 20 aus dieser "Einschnappposition" dem Küchenhobel 10 wieder entnommen werden, um beispielsweise den Einsatz 20 durch einen anderen Einsatz zu ersetzen, betätigt der Anwender das Löseelement 28, d.h. zieht dieses gegen die Vorspannkraft der Federn nach hinten, und bewegt somit die Arretierungsstifte 29a, 29b in ihre eingefahrene Position, so dass der Einsatz 20 ohne weiteres in Richtung des Haltegriffes 14 aus dem Küchenhobel 10 herausgezogen werden kann.

Obgleich sich der vorstehend beschriebene Fixierungs- bzw. Arretierungsmechanismus in der Praxis sehr gut bewährt hat, kann nicht vollständig ausgeschlossen werden, dass beim Schneiden von Gemüse oder Obst ein Benutzer unabsichtlich das Löseelement 28 berührt und somit den eingesetzten Einsatz 20 aus dem Küchenhobel 10 losmacht. Hierbei ist nicht auszuschließen, dass die scharfen Klingen des V-förmig zulaufenden Messers 16 des Küchenhobels 10 freigelegt werden, was eine potentielle Gefahrenquelle darstellt.

Aufgabe der vorliegenden Erfindung ist es, den in der DE 20 2007 008 380 beschriebenen Küchenhobel dahingehend zu verbessern, dass ein unbeabsichtigtes Losmachen eines Einsatzes aus dem Küchenhobel ausgeschlossen ist.

### ZUSAMMENFASSUNG DER ERFINDUNG

Diese Aufgabe wird durch einen Küchenhobel gemäß Anspruch 1 gelöst.

Weitere vorteilhafte Ausgestaltungen sind in den Unteransprüchen definiert.

### KURZE BESCHREIBUNG DER ZEICHNUNGEN

Die folgenden Figuren stellen ein bevorzugtes Ausführungsbeispiel eines erfindungsgemäßen Küchenhobels dar und dienen der Verdeutlichung der Erfindung.
Figur 1a zeigt eine perspektivische Ansicht eines bekannten Küchenhobels von schräg oben, wobei ein bekannter Einsatz in den bekannten Küchenhobel eingesetzt ist.
Figur 1b zeigt eine perspektivische Ansicht des bekannten Küchenhobels von Figur 1a von schräg unten ohne Einsatz.
Figur 1c zeigt eine perspektivische Ansicht eines bekannten Einsatzes von schräg unten, der mit dem erfindungsgemäßen Küchenhobel verwendet werden kann.
Figur 1d zeigt eine perspektivische Detailansicht des bekannten Küchenhobels von Figur 1a und eines in diesen eingesetzten Einsatzes.
Figur 2 zeigt eine perspektivische Ansicht eines Küchenhobels gemäß einer bevorzugten Ausführungsform der Erfindung von schräg oben.
Figur 3 zeigt eine perspektivische Ansicht des Küchenhobels von Figur 2 von schräg oben, wobei der Haltegriff nach unten in eine Endposition verschwenkt ist.
Figur 4 zeigt eine perspektivische Ansicht des Küchenhobels von Figur 2 von schräg unten, wobei der Haltegriff nach unten in eine Endposition verschwenkt ist.
Figur 5 zeigt eine Detailansicht des Küchenhobels von Figur 2, die einen Teil des verschwenkbaren Haltegriffs und dessen Verbindung über Gelenke mit den seitlichen Längsträgern zeigt.

### DETAILLIERTE BESCHREIBUNG DER BEVORZUGTEN AUSFÜHRUNGSFORM

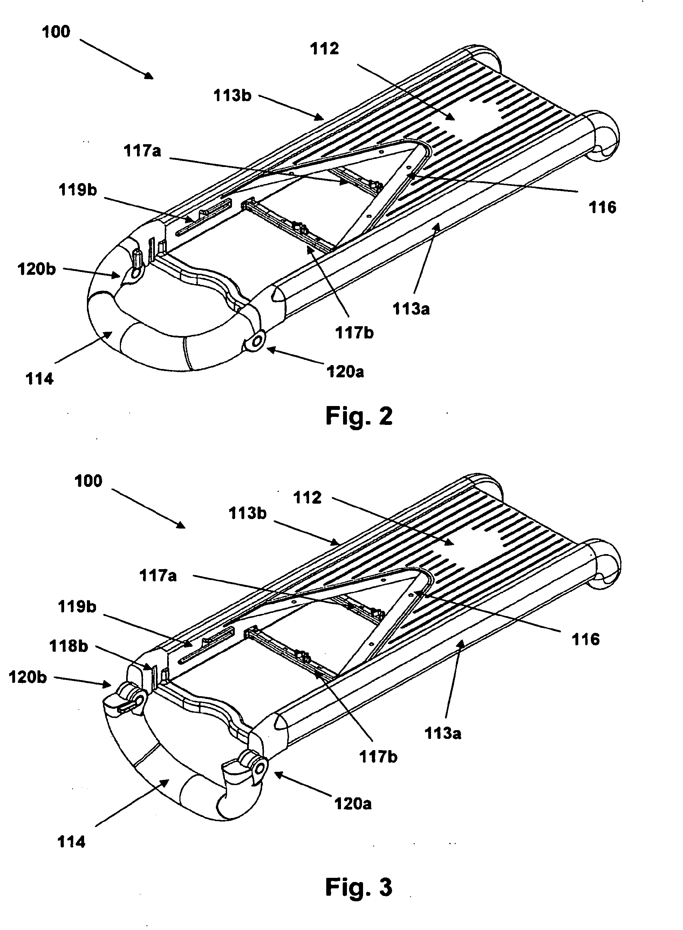

Die Figuren 2 bis 5 zeigen einen Küchenhobel 100 gemäß einer bevorzugten Ausführungsform der Erfindung. Der Küchenhobel 100 besteht im Wesentlichen aus einem Grundkörper mit einer Basisplatte 112, deren Oberseite eine Auslauffläche bildet.

An den seitlichen Rändern der Basisplatte 112 ist jeweils ein Längsträger 113a, 113b angebracht, die dem Küchenhobel 100 eine größere Stabilität verleihen. Zwischen diesen Längsträgern 113a, 113b ist am oberen Ende des Küchenhobels 100 ein Haltegriff 114 ausgebildet, der es einem Benutzer ermöglicht, den Küchenhobel 100 geeignet zu positionieren und beim Schneiden von Gemüse oder Obst zu halten. Die Enden der Längsträger 113a, 113b sind am unteren Ende des Küchenhobels 100 nach unten gebogen.

Neben einer Verbindung über die Basisplatte 112 sowie den Haltegriff 114 sind die Längsträger 113a, 113b über zwei Querstege 117a und 117b miteinander verbunden. Diese Querstege 117a und 117b dienen zum einen zur Stabilisierung des Küchenhobels 100 und zum anderen als Auflagefläche und als Führung für in den Küchenhobel 100 einzusetzende Einsätze. Hierzu weisen die beiden Querstege 117a und 117b vorzugsweise jeweils ungefähr in der Mitte zwei zentrale, nach oben abstehende Nasen auf, die zwischen sich eine Lücke ausbilden.

Am vorderen Ende der durch die Basisplatte 112 ausgebildeten Auslauffläche ist ein aus zwei Einzelmessern zusammengesetztes V-Messer 116 angeordnet ist. Dabei ist die Auslauffläche bündig mit der Oberseite des V-Messers 116 ausgerichtet.

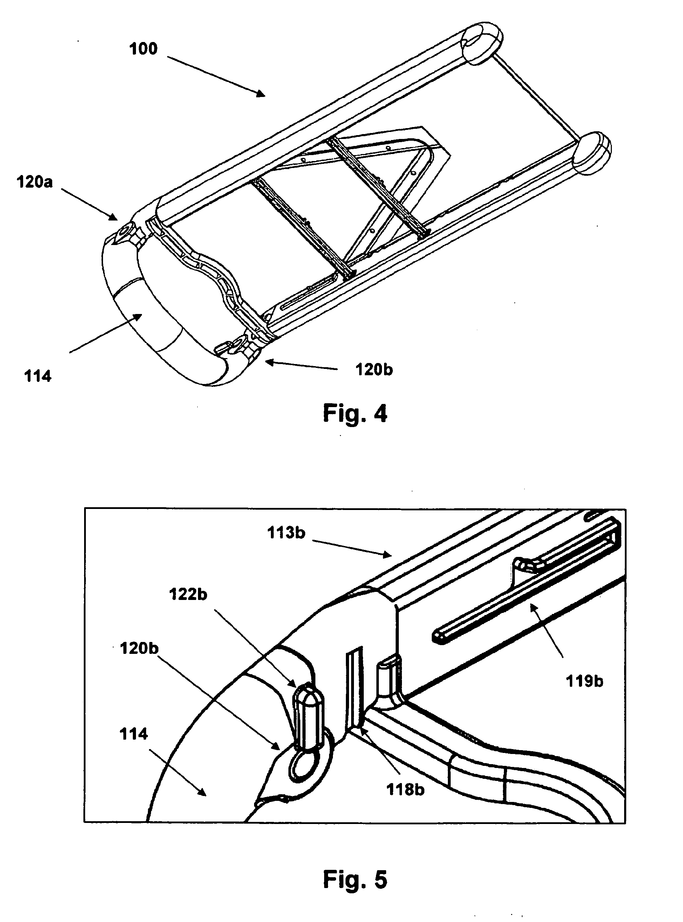

Wie sich dies den Figuren 2 bis 5 entnehmen lässt, ist der Haltegriff 114 des erfindungsgemäßen Küchenhobels 100 durch Gelenke 120a und 120b verschwenkbar ausgestaltet, die den Haltegriff 114 jeweils mit den Längsträgern 113a, 113b derart verbinden, dass der Haltegriff 114 relativ zu den Längsträgern und damit zum Rest des erfindungsgemäßen Küchenhobels verschwenkt werden kann. Dabei zeigt Figur 2 eine erste Position oder Grundposition des Haltegriffs 114, in der der Haltegriff 114 an die jeweiligen Längsträger 113a, 113b anstößt, und Figur 3 zeigt eine zweite Position oder Endposition, in der der Haltegriff 114 aus der Grundposition heraus geschwenkt ist. Wie sich dies insbesondere Figur 5 entnehmen lässt, weist der Haltegriff 114 in der Nähe der Gelenke 120a und 120b jeweils einen Fixierungsvorsprung 122a, 122b auf. Diese Fixierungsvorsprünge 122a, 122b sind jeweils derart ausgestaltet, dass diese in der Grundposition des Haltegriffs 114 an jeweilige Abschnitte des hinteren Endes eines in den Küchenhobel eingesetzten Einsatzes anstoßen und den Einsatz somit im Küchenhobel 100 fixieren. Zum Herausnehmen eines benutzten Einsatzes und zum Einbringen eines neuen Einsatzes wird der Haltegriff 114 aus dessen Grundposition in dessen Endposition verschwenkt. In dieser Endposition des Haltegriffs 114 wird ein sich in dem Küchenhobel 100 befindender Einsatz nicht mehr durch die am Haltegriff 114 angebrachten Fixierungsvorsprünge 122a, 122b fixiert, so dass der Einsatz ohne weiteres entnommen werden kann und durch einen anderen Einsatz ersetzt werden kann. Ist ein neuer Einsatz derart in den Küchenhobel 100 eingebracht worden, kann der Haltegriff 114 wieder in dessen Grundposition verschwenkt werden, in der die Fixierungsvorsprünge 122a, 122b des Haltegriffs 114 wiederum an jeweilige Abschnitte des hinteren Endes des Einsatzes anstoßen und den Einsatz somit im Küchenhobel 100 fixieren. Es ist denkbar, dass der erfindungsgemäße Küchenhobel eine Arretierungsvorrichtung aufweist, die den Haltegriff 114 in der Grundposition arretiert, so dass zum Verschwenken des Haltegriffs 114 aus der Grundposition in die Endposition zunächst die Arretierungsvorrichtung entriegelt werden muss. Die Arretierungsvorrichtung kann beispielsweise als Schnappmechanismus ausgestaltet sein.

Der Küchenhobel 100 kann beispielsweise mit dem in Figur 1c gezeigten Einsatz 20 oder den aus der DE 20 2007 008 380 bekannten Einsätzen verwendet werden. Ein derartiger Einsatz weist an seinen beiden Seiten jeweils eine längliche Führungsnut 26a, 26b auf (siehe Figur 1c). Diese Führungsnuten 26a, 26b werden beim Einbringen des Einsatzes in den Küchenhobel 100 in entsprechende Führungsfedern 119a, 119b eingeführt. Diese Führungsfedern 119a, 119b sind an den Innenseiten der Längsträger 113a, 113b derart ausgebildet, dass der Einsatz mit seinen Führungsnuten 26a, 26b schmiegsam nur soweit in die Führungsfedern 119a, 119b eingebracht werden kann, dass zwar die Oberseite des Einsatzes das V-Messer 116 abdeckt, der Rest des Einsatzes jedoch das V-Messer 116 und insbesondere dessen Klingen nicht berühren kann. Hierzu enden die Führungsfedern 119a, 119b an ihrem unteren Ende jeweils in einem Stopperelement, beispielsweise in Form eines Querstegs, an den die vorderen Enden der Führungsnuten 26a, 26b anstoßen, wenn der Einsatz vollständig in den Küchenhobel 100 eingebracht ist. Der Fachmann erkennt somit, dass das Zusammenwirken der Führungsnuten 26a, 26b des Einsatzes mit den an den Innenseiten der Längsträger 113a, 113b des Küchenhobels 100 angebrachten Führungsfedern 119a, 119b zum einen dazu dient, das Einbringen des Einsatzes in den Küchenhobel 100 zu führen, und zum anderen, insbesondere mittels des Stopperelements, dazu dient, eine Bewegung des Einsatzes in Richtung des V-Messers 116 über die Einsatzposition hinaus zu vermeiden.

Wie vorstehend bereits beschrieben, weist ein bekannter Einsatz an seinem hinteren bzw. proximalen Ende einen Verriegelungsmechanismus zum Arretieren bzw. Verriegeln des vollständig in einen bekannten Küchenhobel eingesetzten Einsatzes auf. Der erfindungsgemäße Küchenhobel 100 ist derart konfiguriert, dass bekannte Einsätze, die mit diesem Verrieglungsmechanismus ausgestattet sind, mit dem erfindungsgemäßen Küchenhobel 100 verwendet werden können. Hierzu sind in den Innenseiten der Längsträger 113a, 113b des erfindungsgemäßen Küchenhobels 100 jeweils im Wesentlichen rechteckige Aussparungen 118a, 118b vorgesehen, in die die Arretierungsstifte 29a, 29b des Einsatzes aufgrund der Vorspannkraft der Verriegelungseinrichtung einschnappen können, nachdem der Einsatz vollständig in den erfindungsgemäßen Küchenhobel 100 eingebracht worden ist. Dabei entspricht die Einschnappposition des Einsatzes in dem Küchenhobel 100 vorzugsweise der vorstehend beschriebenen Position, in der die vorderen Enden der Führungsnuten 26a, 26b an den jeweiligen Stopperelementen der Führungsfedern 119a, 119b des erfindungsgemäßen Küchenhobels 100 anstoßen. Der erfindungsgemäße Küchenhobel 100 kann jedoch auch mit Einsätzen verwendet werden, die nicht den vorstehend beschriebenen Verriegelungsmechanismus aufweisen.

Mittels der vorstehend beschriebenen Ausgestaltung des erfindungsgemäßen Küchenhobels 100 ist ein Einsatz im eingesetzten und verriegelten Zustand dreifach gegen eine Verschiebung in der Längsrichtung des Küchenhobels 100 gesichert, nämlich erstens durch die in die Aussparungen 118a, 118b eingeschnappten Arretierungsstifte 29a, 29b, zweitens durch die anstoßende Beziehung zwischen den vorderen Enden der Führungsnuten 26a, 26b des Einsatzes und den Stopperelementen der Führungsfedern 119a, 119b und drittens mittels der anstoßenden Beziehung zwischen den Fixierungsvorsprüngen 122a, 122b des Haltegriffs 114 und jeweiligen Abschnitten am hinteren Endes des Einsatzes in der Grundposition des Haltegriffs 114.

Anhand der vorstehend beschriebenen Ausführungsform erkennt der Fachmann, dass auf der Basis des erfindungsgemäßen Küchenhobels weitere vorteilhafte Ausgestaltungen verwirklicht werden können. Insbesondere erkennt der Fachmann, dass weitere Einsätze, beispielsweise mit einer anderen Anzahl und einer anderen Höhe von hochstehenden Messern, für die Verwendung mit dem erfindungsgemäßen Küchenhobel geeignet sind. Ferner ist es vorstellbar, dass anstatt des hier beschriebenen Küchenhobels mit einem V-Messer ein Küchenhobel mit einem zur Richtung des Schneidehubs quer verlaufenden Messer verwendet wird. Schließlich wird der Fachmann erkennen, dass die hierin verwendeten Begriffe, wie "oben" bzw. "unten", "vorne" bzw. "hinten" und dergleichen, nicht dazu gedacht sind, die Orientierung der dadurch näher gekennzeichneten erfindungsgemäßen Elemente in irgendeiner Weise zu beschränken, sondern lediglich dazu dienen, diese Elemente von einander zu unterscheiden.

## Patentansprüche

1. Küchenhobel (100) zum Schneiden von Schneidgut, wie Obst, Gemüse und dergleichen, wobei der Küchenhobel umfasst:
eine Basisplatte (112), an der ein Messer (116) festgelegt ist und die eine Auslauffläche ausbildet;
zwei Längsträger (113a, 113b), die die Basisplatte (112) seitlich begrenzen und stabilisieren; und
einen Haltegriff (114), der derart verschwenkbar ausgestaltet ist, dass in einer ersten Position ein in den Küchenhobel (100) eingesetzter Einsatz fixiert wird und in einer zweiten Position ein Einsatz in den Küchenhobel (100) eingesetzt bzw. aus diesem herausgenommen werden kann.

2. Küchenhobel (100) nach Anspruch 1, wobei der Haltegriff (114) Fixierungsvorsprünge (122a, 122b) aufweist, die in der ersten Position des Haltegriffs (114) an jeweilige Abschnitte des hinteren Endes eines in den Küchenhobel eingesetzten Einsatzes anstoßen und den Einsatz somit im Küchenhobel (100) fixieren

3. Küchenhobel (100) nach Anspruch 1, wobei der Küchenhobel (100) ferner eine Arretierungsvorrichtung umfasst, die den Haltegriff (114) in der ersten Position arretiert, so dass zum Verschwenken des Haltegriffs (114) aus der ersten Position in die zweite Position die Arretiorungsvorrichtung entriegelt werden muss.

4. Küchenhobel (100) nach Anspruch 3, wobei die Arretierungsvorrichtung einen Schnappmechanismus umfasst.

5. Küchenhobel (100) nach Anspruch 1, wobei der Haltegriff (114) über Gelenke (120a, 120b) mit den Längsträgern (113a, 113b) verbunden ist.

6. Küchenhobel (100) nach Anspruch 1, wobei an den Innenseiten der Längsträger (113a, 113b) Aussparungen (118a, 118b) vorgesehen sind, in die vorgespannte Arretierungsstifte eines Einsatzes im eingesetzten Zustand eingreifen können.

7. Küchenhobel (100) nach Anspruch 1, wobei an den Innenseiten der Längsträger (113a, 113b) Führungsfedern (119a, 119b) ausgebildet sind, die an ihrem unteren Ende jeweils in einem Stopperelement enden.

8. Küchenhobel (100) nach Anspruch 1, wobei die zwei Längsträger (113a, 113b) über zwei Querstege (117a, 117b) miteinander verbunden sind, die als Auflagefläche für einen Einsatz dienen.

9. Küchenhobel (100) nach Anspruch 1, wobei das Messer (116) in Schneidrichtung V-förmig zuläuft.

## Claims

1. A kitchen slicer (100) for cutting foodstuff, such as fruits, vegetables and the like, wherein the kitchen slicer comprises:
a base plate (112), wherein a knife (116) is fixed to the base plate (112) and the base plate (112) forms an exit surface;
two longitudinal supports (113a, 113b) that stabilize and limit the base plate (112) laterally; and
a handling grip (114) that is pivotally configured such that in a first position an insert inserted into the kitchen slicer (100) is being fixed in position and in a second position an insert can be inserted into the kitchen slicer (100) or removed therefrom.

2. The kitchen slicer (100) according to claim 1, wherein the handling grip (114) comprises fixing projections (122a, 122b) that abut in the first position of the handling grip (114) respective portions of the rear end of an insert inserted into the kitchen slicer and thereby fix the position of the insert within the kitchen slicer (100).

3. The kitchen slicer (100) according to claim 1, wherein the kitchen slicer (100) moreover comprises a locking device that locks the handling grip (114) in the first position such that for pivoting the handling grip (114) from the first position into the second position the locking device has to be unlocked.

4. The kitchen slicer (100) according to claim 3, wherein the locking device comprises a snap mechanism.

5. The kitchen slicer (100) according to claim 1, wherein the handling grip (114) is connected to the longitudinal supports (113a. 113b) via joints (120a, 120b).

6. The kitchen slicer (100) according to claim 1, wherein recesses (118a, 118b) are provided at the inside surfaces of the longitudinal supports (113a, 113b), which can be engaged by biased locking pins of an insert in the state of being inserted.

7. The kitchen slicer (100) according to claim 1, wherein guiding tongues (119a, 119b) are formed on the inside surfaces of the longitudinal supports (113a, 113b) that terminate at their respective lower ends in a stopper element.

8. The kitchen slicer (100) according to claim 1, wherein the two longitudinal supports (113a, 113b) are connected together by means of two transversal braces (117a, 117b) that serve as a supporting surface for an insert.

9. The kitchen slicer (100) according to claim 1, wherein the knife (116) tapers in cutting direction in the shape of a V.

## Revendications

1. Rabot de cuisine (100) destiné à couper des matières à trancher telles que fruits, légumes et autres, dans lequel le rabot de cuisine comporte:
une plaque de base (112), à laquelle est fixée une lame (116) et qui forme une surface de décharge;
deux longerons (113a, 113b), qui limitent latéralement et stabilisent la plaque de base (112); et
une poignée de maintien (114), qui est conçue pour pouvoir pivoter de telle manière que dans une première position un insert introduit dans le rabot de cuisine (100) est fixé et dans une deuxième position un insert peut être introduit dans le rabot de cuisine (100) ou respectivement extrait de celui-ci.

2. Rabot de cuisine (100) selon la revendication 1, dans lequel la poignée de maintien (114) présente des avancées de fixation (122a, 122b), qui dans la première position de la poignée de maintien (114) s'enclenchent sur la section concernée de l'extrémité postérieure d'un insert introduit dans le rabot de cuisine et fixent ainsi l'insert dans le rabot de cuisine (100).

3. Rabot de cuisine (100) selon la revendication 1, dans lequel le rabot de cuisine (100) comprend en outre un dispositif d'arrêt, qui bloque la poignée de maintien (114) dans la première position, de telle manière que pour faire pivoter la poignée de maintien (114) de la première position dans la deuxième position, on doit déverrouiller le dispositif d'arrêt.

4. Rabot de cuisine (100) selon la revendication 3, dans lequel le dispositif d'arrêt comporte un mécanisme d'encliquetage.

5. Rabot de cuisine (100) selon la revendication 1, dans lequel la poignée de maintien (114) est reliée aux longerons (113a, 113b) par l'intermédiaire d'articulations (120a, 120b).

6. Rabot de cuisine (100) selon la revendication 1, dans lequel sur les faces internes des longerons (113a, 113b) sont prévues des rainures (118a, 118b), dans lesquelles les chevilles d'arrêt précontraintes peuvent retenir un insert à l'état introduit.

7. Rabot de cuisine (100) selon la revendication 1, dans lequel sur les faces internes des longerons (113a,113b) sont prévues des glissières de guidage (119a, 119b), qui se terminent à leur extrémité inférieure à chaque fois par un élément formant butée.

8. Rabot de cuisine (100) selon la revendication 1, dans lequel les deux longerons (113a, 113b) sont reliés entre eux par l'intermédiaire de deux traverses (117a, 117b) qui servent de surface d'appui pour un insert.

9. Rabot de cuisine (100) selon la revendication 1, dans lequel le couteau (116) présente une forme en V dans la direction de coupe.
